# EUROPÄISCHE PATENTSCHRIFT

(11) **EP 3 149 368 B1**
(45) Veröffentlichungstag und Bekanntmachung des Hinweises auf die Patenterteilung: **01.01.2020**
(21) Anmeldenummer: 15723948.4
(22) Anmeldetag: 20.05.2015
(51) Int. Cl.: F16K 11/078, F16K 27/04, G05D 23/13

(54) **STEUERKARTUSCHE MIT HOHEM VOLUMENSTROM UND VARIABLEM MISCHWASSERAUSLAUF**
CONTROL CARTRIDGE WITH HIGH VOLUMETRIC FLOW AND VARIABLE MIXED WATER OUTLET
CARTOUCHE DE COMMANDE À DÉBIT VOLUMIQUE ÉLEVÉ ET SORTIE VARIABLE DE L'EAU MÉLANGÉE

(30) Priorität: 26.05.2014 DE 102014007592
(43) Veröffentlichungstag der Anmeldung: 05.04.2017
(73) Patentinhaber: CeramTec GmbH, 73207 Plochingen (DE)
(72) Erfinder: LEINEN, Josef, 54516 Wittlich (DE)
(74) Vertreter: Fehrenbacher, Eckhard Anton
(86) Internationale Anmeldenummer: PCT/EP2015/061104
(87) Internationale Veröffentlichungsnummer: WO 2015/181020

(56) Entgegenhaltungen:
- EP-A1- 0 044 901
- US-A- 3 747 638
- US-A- 4 733 688
- US-A- 5 755 261
- US-A1- 2014 034 857

## Beschreibung

Die Erfindung beschreibt eine Steuerkartusche für Einhebelmischbatterien mit einem Gehäuse mit einer zylindrischen Gehäusewand und mit einem Boden mit einer Bohrung für einen Zulauf für Kaltwasser und einer Bohrung für einen Zulauf für Warmwasser, wobei auf dem Boden drei übereinanderliegende Keramikscheiben angeordnet sind, nämlich eine untere Grundscheibe mit einer Bohrung für den Zulauf für Warmwasser und einer Bohrung für den Zulauf für Kaltwasser, eine auf der Grundscheibe aufliegende verdreh- und verschiebbare keramische Steuerscheibe mit einer Steuerkante auf der Umfangsfläche und eine obere Lagerscheibe, die zum Gehäuse oder zur Gehäusewand abgedichtet ist.

In herkömmlichen Einhebelmischbatterien werden fast ausschließlich Ventile mit keramischen Dichtscheiben eingesetzt, diese Ventile werden in der Sanitärarmaturenbranche Kartuschen oder Steuerkartuschen genannt (siehe die Dokumente US 4,733,688 A1, EP 0 044 901 A1, US 2014/0034857 A1 oder US 5,755,261 A1). Diese Kartuschen zeichnen sich fast alle dadurch aus, dass in einem Gehäuse zwei keramische Dichtscheiben, eine Grundscheibe und eine Steuerscheibe, enthalten sind. Bei einigen Sonderanwendungungen werden auch Kartuschen mit 3 Dichtscheiben eingesetzt.

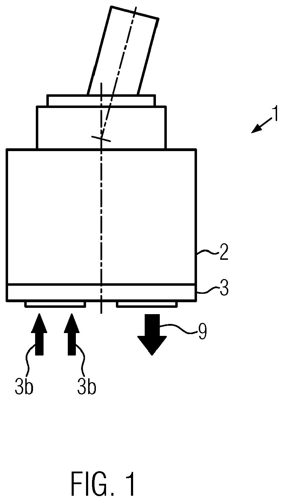

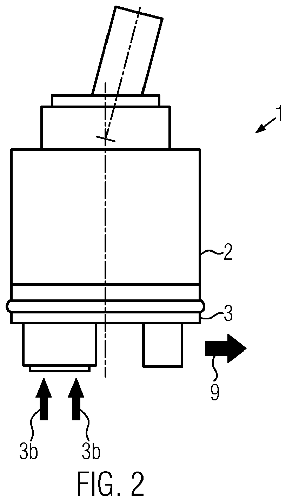

Herkömmliche Kartuschen sind derart konzipiert, dass die Zuläufe des Kalt- bzw. Warmwassers vertikal von unten in die Kartusche führen. Das Mischwasser tritt ebenso vertikal in umgekehrter Richtung aus der Kartusche aus (siehe Figur 1). Das wird dadurch erreicht, dass das Wasser in der Steuerscheibe um 180° umgelenkt wird. Wird ein seitlicher Wasseraustritt gefordert, wird der Kartuschenboden erhöht, sodass das Wasser über den erhöhten Boden seitlich austreten kann (siehe Figur 2).

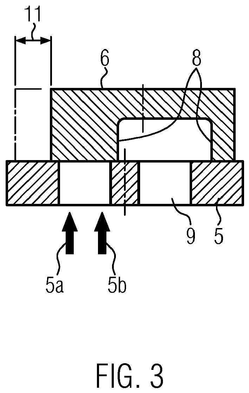

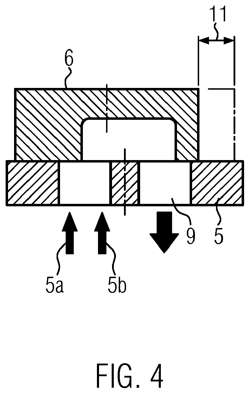

Die Abdichtung zum Armaturenkörper wird dann über eine Abdichtung am Umfang des Bodens realisiert, z. B. ein O-Ring. Das erfordert zwangsläufig mehr Bauraum in der Höhe. Bei beiden Systemen wird das Wasser aber immer in der Steuerscheibe um 180° umgelenkt. Der Hub der Steuerscheibe beeinflusst wesentlich die Öffnungsqueschnitte der Grundscheibe und damit den maximalen Volumenstrom des Ventiles. Je größer der Hub desto größer der Volumenstrom. Wesentlich begrenzt wird der Hub durch die Tatsache, dass die Steuerscheibe das Wasser umlenken muss und dadurch topfartig gestaltet ist. Diese Situation zeigt Figur 3 bei geschlossener Kartusche und Figur 4 bei geöffneter Kartusche.

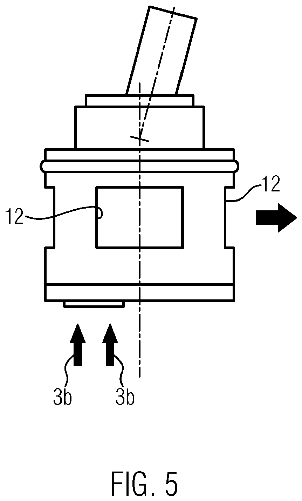

Um diese Problem zu umgehen gibt es vereinzelt sogenannte "offene Kartuschen" mit einem seitlich offenen Gehäuse (siehe Figur 5). Diese Systeme lassen aber einen Mischwasserauslauf ausschließlich nach unten nicht zu, da das Gehäuse ja offen ist und somit zwangsläufig zu Undichtigkeiten führen würde. Auch ein geschlossenes Gehäuse würde zu Undichtigkeiten führen, da der Boden nicht zum Gehäuse hin abgedichtet ist.
Figur 1 zeigt eine bekannte Steuerkartusche 1 mit einem Gehäuse mit einer Gehäusewand 2 und einem flachen Boden 3. In dem Gehäuse sind zwei Dichtcheiben aus Keramik, eine Grundscheibe und eine Steuerscheibe angeordnet. Die Grundscheibe hat neben dem Zulauf für Warmwasser 3b und dem Zulauf für Kaltwasser 3a einen Mischwasserauslauf 9. Das Mischwasser verlässt vertikal die Grundscheibe und damit die Steuerkartusche 1.
Figur 2 zeigt eine bekannte Steuerkartusche 1 mit seitlichem Mischwasserauslauf. Die Kartusche hat hier einen sogenannten hohen Boden, d.h. die Bauhöhe ist wesentlich größer. Das Mischwasser verlässt hier ebenfalls die Grundscheibe vertikal und wird durch den hohen Boden seitlich abgelenkt.

Bei diesen bekannten Steuerkartuschen 1 sind die Steuerkanten 8 auf einer Innenfläche der Steuerscheibe 6 angeordnet. Hierzu sagt man auch, dass die Steuerscheibe 6 geschlossen oder topfartig ausgildet ist ist. Dies zeigen die Figuren 3 und 4. Figur 3 zeigt die Stellung der Steuerscheibe 6, bei der die Steuerkartusche 1 geschlossen ist. Figur 4 zeigt die Stellung der Steuerscheibe 6, bei der die Steuerkartusche 1 geöffnet ist.

Durch diese geschlossene Steuerscheibe 6 mit der Steuerkante 8 auf der Innenfläche steht nur ein geringer Querschnitt für die Zuläufe kalt und warm 5a, 5b sowie für den Mischwasserauslauf 9 zur Verfügung, da der Hub 11 stark begrenzt ist. Die Steuerscheibe 6 muss in allen Stellungen die Bohrungen der Grundscheibe 5 überdecken damit die Dichtigkeit gewährleistet ist (Figuren 3 und 4). Damit ist auch der maximale Volumenstrom der Kartusche stark begrenzt.

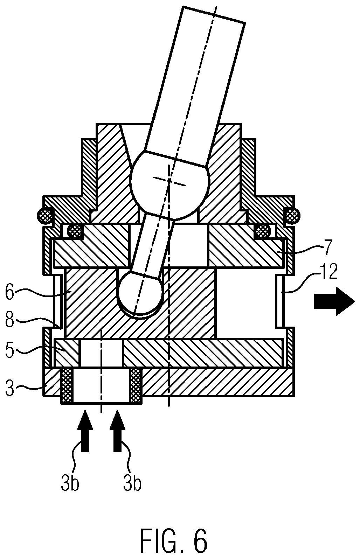

Zur Verstärkung des maximalen Volumenstromes ist eine gattungsbildende spezielle Steuerkartusche 1 mit drei Keramikscheiben 5, 6, 7 bekannt, einer unteren Grundscheibe 5, einer mittleren Steuerscheibe 6 und einer oberen Lagerscheibe 7. Eingebaut sind diese drei Scheiben 5, 6, 7 in einem Gehäuse, welches auf seiner Umfangsfläche bzw. seiner Gehäusewand 2 einen Mischwasserauslauf aufweist. Bezeichnet wird dieser Auslauf auch als seitlicher Auslauf 12. Der Bauraum, in dem sich die Scheiben 5, 6, 7 befinden, ist zum Gehäuse und zum Boden 3 hin offen, d.h. nicht abgedichtet (siehe Figuren 5 und 6).

Die Grundscheibe 5 weist ausschließlich zwei Bohrungen auf, nämlich einen Zulauf 5a für Kaltwasser und einen Zulauf 5b für Warmwasser. Ein Mischwasserauslauf ist in der Grundscheibe 5 nicht vorhanden (siehe Figur 6).

Durch Verschieben und Drehen der Steuerscheibe werden wie üblich die Bohrungen geöffnet bzw. geschlossen, so dass die Temperatur des Mischwassers und der Volumenstrom eingestellt werden kann. Ein wichtiges Merkmal dieser bekannten Steuerscheibe 6 ist die Lage der Steuerkante 8. Diese befindet sich auf der Umfangsfläche der Steuerscheibe 6 und nicht, wie dies bei Standard-Kartuschen der Fall ist, auf einer Innenfläche der Steuerscheibe. Liegt die Steuerkante 8 auf der Umfangsfläche hat dies den Vorteil, dass bei gleichem Bauraum mehr Hub erzielt werden kann und der Mischwasserauslauf wesentlich größer gestaltet werden kann. Diese spezielle Steuerkartusche hat daher einen höheren Volumenstrom der deutlich über dem der Standardkartuschen aus Figur 1 und 2 liegt. Diese spezielle Steuerkartusche ist jedoch nur für einen seitlichen Ausgang geeignet, da der Boden nicht zum Gehäuse hin abgedichtet ist (siehe Figur 6).

Der Erfindung liegt die Aufgabe zugrunde, die eben beschriebene spezielle Steuerkartusche mit dem hohen Volumenstrom so zu verbessern, dass der Mischwasserauslauf entweder seitlich oder vertikal erfolgen kann bei gleichem Bauraum bzw. gleicher Bauhöhe und Baudurchmesser. Wesentlich ist die Vorgabe bei gleichem Bauraum.

Erfindungsgemäß wird diese Aufgabe durch eine Steuerkartusche nach Anspruch 1 gelöst.

Dadurch, dass der Boden und die Grundscheibe neben den beiden Zuläufen jeweils einen Mischwasserauslauf aufweisen, wobei die Zuläufe für Warmwasser, für Kaltwasser und der Mischwasserauslauf im Boden und in der Grundscheibe übereinander liegend angeordnet sind, der Boden zur Gehäusewand hin abgedichtet ist und je nach Erfordernis die Gehäusewand eine Öffnung für einen seitlichen Mischwasserauslauf aufweist oder keine Öffnung in der Gehäusewand für einen vertikalen Mischwasserauslauf aufweist, ist eine Steuerkartusche mit hohem Volumenstrom geschaffen, bei der der Mischwasserauslauf entweder seitlich oder vertikal erfolgen kann bei gleichem Bauraum bzw. gleicher Bauhöhe und Baudurchmesser. Der Unterschied besteht ausschließlich in der Gehäusewand, die bei seitlichem Mischwasserauslauf eine Öffnung aufweist und bei vertikalem Mischwasserauslauf geschlossen ist. Bei seitlichem Mischwasserauslauf muss der Mischwasserauslauf im Boden verschlossen werden.

Erfindungsgemäß ist für einen seitlichen Mischwasserauslauf in der zylindrischen Gehäusewand eine Öffnung angeordnet.

Erfindungsgemäß ist für einen vertikalen Mischwasserauslauf die zylindrische Gehäusewand geschlossen.

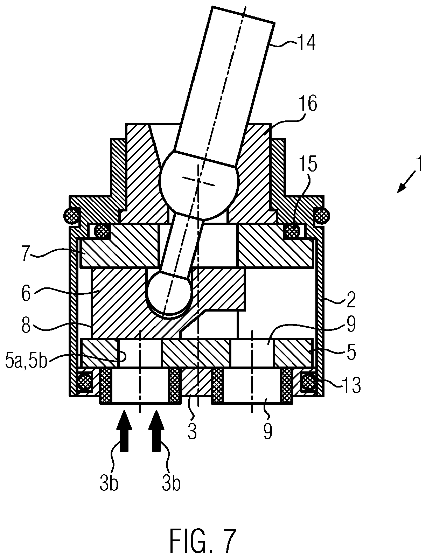

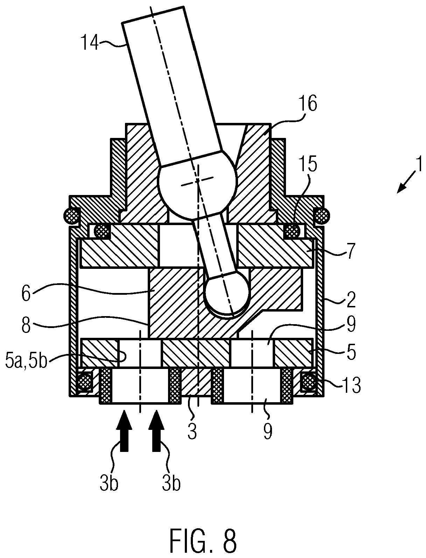

Die Erfindung zeichnet sich also dadurch aus, dass
a. die Grundscheibe neben den beiden Zuläufen einen Mischwasserauslauf aufweist (Figur 7 und 8 zeigen die Steuerkatusche in geschlossener und geöffneter Stellung mit Mischwasserauslauf in der Grundscheibe),
b. dass der Boden zum Gehäuse hin abgedichtet ist (Figur 7 und 8) und
c. je nach Erfordernis das Gehäuse ausschließlich einen seitlichen oder ausschließlich einen vertikalen Mischwasserauslauf aufweist, wobei beim Gehäuse mit dem seitlichen Mischwasserauslauf das Gehäuse nur eine Öffnung in der Umfangsfläche der Gehäusewand hat und beim Gehäuse mit dem vertikalen Mischwasserauslauf das Gehäuse in der Gehäusewand keinen Mischwasserauslauf hat (Figur 7 und 8).

Das Wasser wird erfindungsgemäß nicht mehr in der Steuerscheibe umgelenkt sondern im Gehäuse. Das hat zur Folge, dass das Gehäuse sowohl nach unten als auch nach oben abgedichtet werden muss, was nach oben über eine dritte Dichtscheibe, die Lagerscheibe, erreicht wird und nach unten über eine Abdichtung zwischen Boden und Gehäuse.

Dadurch lässt sich auf gleichem Raum wesentlich mehr Hub realisieren, was gleichbedeutent ist mit mehr Volumenstrom.

Figur 7 zeigt eine erfindungsgemäße Steuerkartusche 1 die geschlossen ist und Figur 8 zeigt eine erfindungsgemäße Steuerkartusche 1 die geöffnet ist.

In einem Gehäuse mit einer Gehäusewand 2 befindet sich ein Boden 3, in dem drei Bohrungen, nämlich ein Zulauf 3a für Kaltwasser, ein Zulauf 3b für Warmwasser und ein Mischwasserauslauf 9 angeordnet sind. Der Boden 3 ist erfindungsgemäß zur Gehäusewand 2 abgedichtet. Zu diesem Zweck befindet sich auf dem Außenumfang des Bodens 3 ein umlaufender Dichtungsring 13.

Auf dem Boden 3 liegt eine Grundscheibe 5 auf, die wie der Boden 3 drei Bohrungen, nämlich einen Zulauf 5a für Kaltwasser, einen Zulauf 5b für Warmwasser und einen Mischwasserauslauf 9 aufweist. Die Grundscheibe 5 ist zur Gehäusewand 2 nicht abgedichtet, weil der Boden 3 zur Gehäusewand 2 abgedichtet ist.

Auf der Grundscheibe 5 liegt eine Steuerscheibe 6 auf. Das besondere an dieser Steuerscheibe 6 ist die Steuerkante 8 auf der Umfangsfläche. Die Steuerscheibe 6 lässt sich über den Pivot 14 drehen und verschieben.

Auf der Steuerscheibe 6 liegt eine Lagerscheibe 7 auf, die über einen Dichtungsring 15 gegenüber dem Gehäuse oder gegenüber der Gehäusewand 2 abgedichtet ist. Der Pivot 14 ragt durch die Lagerscheibe 7. Auf der Lagerscheibe 7 befindet sich eine Muffe 16, in der der Pivot 14 gelagert ist.

## Patentansprüche

1. Steuerkartusche (1) für Einhebelmischbatterien mit einem Gehäuse mit einer zylindrischen Gehäusewand (2) und mit einem Boden (3) mit einer Bohrung für einen Zulauf (3a) für Kaltwasser und einer Bohrung für einen Zulauf (3b) für Warmwasser, wobei auf dem Boden (3) drei übereinanderliegende Keramikscheiben (5, 6, 7) angeordnet sind, nämlich eine untere Grundscheibe (5) mit einer Bohrung für den Zulauf (5b) für Warmwasser und einer Bohrung für den Zulauf (5a) für Kaltwasser, eine auf der Grundscheibe (5) aufliegende verdreh- und verschiebbare keramische Steuerscheibe (6) mit einer Steuerkante (8) auf der Umfangsfläche und eine obere Lagerscheibe (7), die zum Gehäuse oder zur Gehäusewand (2) abgedichtet ist, **dadurch gekennzeichnet, dass** der Boden (3) und die Grundscheibe (5) neben den beiden Zuläufen für Kalt- und Warmwasser (3a, 3b, 5a, 5b) jeweils einen Mischwasserauslauf (9) aufweisen, wobei die Zuläufe für Warmwasser (3b, 5b), für Kaltwasser (3a, 5a) und der Mischwasserauslauf (9) im Boden (3) und in der Grundscheibe (5) übereinander liegend angeordnet sind, der Boden (3) zur Gehäusewand (2) hin abgedichtet ist und je nach Erfordernis für einen seitlichen Mischwasserauslauf die Gehäusewand (2) eine Öffnung (10) aufweist oder für einen vertikalen Mischwasserauslauf die Gehäusewand (2) keine Öffnung aufweist.

2. Steuerkartusche nach Anspruch 1, **dadurch gekennzeichnet, dass** für einen seitlichen Mischwasserauslauf in der zylindrischen Gehäusewand (2) eine Öffnung (10) angeordnet ist.

3. Steuerkartusche nach Anspruch 1, **dadurch gekennzeichnet, dass** für einen vertikalen Mischwasserauslauf die zylindrische Gehäusewand (2) geschlossen ist.

## Claims

1. Control cartridge (1) for single-lever mixer faucets, comprising a housing having a cylindrical housing wall (2) and comprising a bottom (3) having a bore for an inlet (3a) for cold water and a bore for an inlet (3b) for hot water, with three superimposed ceramic disks (5, 6, 7) being arranged on the bottom (3), namely a lower base disk (5) having a bore for the inlet (5b) for hot water and a bore for the inlet (5a) for cold water, a rotatable and displaceable ceramic control disk (6) which rests on the base disk (5) and has a control edge (8) on the circumferential surface, and an upper bearing disk (7) which is sealed off from the housing or the housing wall (2), **characterized in that** the bottom (3) and the base disk (5) each have a mixed water outlet (9) in addition to the two inlets for cold and hot water (3a, 3b, 5a, 5b), the inlets for hot water (3b, 5b), for cold water (3a, 5a) and the mixed water outlet (9) being arranged above one another in the bottom (3) and in the base disk (5), the bottom (3) being sealed off from the housing wall (2) and, depending on requirements, the housing wall (2) having an opening (10) for a lateral mixed water outlet or the housing wall (2) not having an opening for a vertical mixed water outlet.

2. Control cartridge according to claim 1, **characterized in that** an opening (10) is arranged in the cylindrical housing wall (2) for a lateral mixed water outlet.

3. Control cartridge according to claim 1, **characterized in that** the cylindrical housing wall (2) is closed for a vertical mixed water outlet.

## Revendications

1. Cartouche de commande (1) pour soupape de mélange à poignée unique, comprenant un boîtier ayant une paroi de boîtier cylindrique (2) et un fond (3) ayant un alésage pour une entrée (3a) d'eau froide et un alésage pour une entrée (3b) d'eau chaude, trois disques en céramique (5, 6, 7) superposés étant disposés sur le fond (3), notamment un disque de base inférieur (5) ayant un alésage pour l'entrée (5b) d'eau chaude et un alésage pour l'entrée (5a) d'eau froide, un disque de commande (6) en céramique rotatif et déplaçable reposant sur le disque de base (5) ayant un bord de commande (8) sur la surface périphérique et un disque de palier supérieur (7), qui est étanche au boîtier ou à la paroi de boîtier (2), **caractérisé en ce que** le fond (3) et le disque de base (5) présentent chacun une sortie d'eau mélangée (9) en plus des deux entrées d'eau froide et chaude (3a, 3b, 5a, 5b), les entrées d'eau chaude (3b, 5b), d'eau froide (3a, 5a) et la sortie d'eau mélangée (9) étant disposées de manière superposée dans le fond (3) et dans le disque de base (5), le fond (3) étant étanche vers la paroi de boîtier (2) et, si nécessaire, la paroi de boîtier (2) présente une ouverture (10) pour une sortie d'eau mélangée latérale, ou la paroi de boîtier (2) ne présente aucune ouverture pour une sortie d'eau mélangée verticale.

2. Cartouche de commande selon la revendication 1, **caractérisée en ce qu'**une ouverture (10) est disposée dans la paroi de boîtier (2) cylindrique pour une sortie d'eau mélangée latérale.

3. Cartouche de commande selon la revendication 1, **caractérisée en ce que** la paroi cylindrique de boîtier (2) est fermée pour une sortie d'eau mélangée verticale.
